# EUROPEAN PATENT APPLICATION

(11) **EP 0 989 768 A1**
(43) Date of publication of application: **29.03.2000**
(21) Application number: 98117987.2
(22) Date of filing: 23.09.1998
(51) Int. Cl.: H04Q 7/32, H04M 15/00

(54) **Method of limiting unauthorized access to telecommunications services**

(71) Applicant: TELEFONAKTIEBOLAGET LM ERICSSON, 126 25 Stockholm (SE)
(72) Inventor: Strom, Georg, 4320 Lejre (DK)
(74) Representative: Roerboel, Leif

(57) **Abstract**

The present invention relates to a method of controlling the amount of services that can be obtained to a terminal from a communication or computer network. The problem with existing methods is that a terminal which is connected to said network already and to which an unauthorized user gets access is in principle unprotected. By controlling the amount of services that are obtained after the last time that an access code or a password has been provided, the amount of damages that can be generated by an unauthorized user is effectively limited in a way which does not disturb a normal authorized user.

## Description

### TECHNICAL FIELD

The present invention relates to a method of controlling an amount of services obtained through a terminal interfacing with a communication- or computer network, in which a password or access code is required in order to get access to services from the communication- or computer network.

### PRIOR ART

US-A-5,497,411 discloses a method of the kind referred to above in which an access code is requested before the terminal can interface with said communication- or computer network. The request for such an access code or password serves the purpose of protection against misuse of such a terminal by unauthorized users. Document US-A-5,497,411 relates in particular to a telecommunication network in which the terminal will only function if a memory card is placed in the terminal and the correct password is provided and verified with the information stored in the memory card. In this method, the user of e.g. a mobile phone is requested to enter an access code or password every time that the mobile phone is switched on in order to establish a connection with the telecommunication network. If an unauthorized person gets hold of a mobile phone, which is switched on and thus connected to the network, this person will not be requested to prompt the access code and thus may be able to use the telephone for a substantial period, until the misuse is detected and the telecommunication operator will disable the phone. In this manner, the unauthorized user may generate costs of an amount which is unacceptable for the owner of the telephone.

Document 92-JP-161875 discloses a system of limiting the monthly call charge to a certain limit by calculating such charges for a certain month. In this way, misuse of the telephone could be restricted, however, if the unauthorized user gets hold of that telephone at the beginning of a calculation period, this person will still be able to create unacceptable costs for the owner of the phone.

Document EP-A-0,746,135 relates to a method for controlling the generated costs in a mobile phone system, in which a limit is set for the maximum costs generated in one single call, after which the call is ended. The disadvantage with this method is that the unauthorized user could make many calls in this way and thus still generate a substantial amount of costs.

### DISCLOSURE OF THE INVENTION

It is, therefore, an object of this invention to provide a method of controlling the amount of services obtained through a terminal interfacing with a communication- or computer network, in which the amount of services that can be obtained from said network by an unauthorized person being in possession of a terminal that is connected to said network is restricted to a certain limit. This object is realized by the characterizing features of claim 1. By denying further access to certain services from said communication- or computer network, when the sum of services obtained from said network since the last entry of the access code or password exceeds a certain limit, the amount of damage that can be generated by an unauthorized user is limited in a simple and effective manner. By calculating the sum of costs that is generated since the last password entry, a relatively low limit can be set which on one hand will not disturb the authorized user but on the other hand provides for an effective limit of costs that may be generated by an unauthorized user.

Another objective of this invention is to provide a method of the above-mentioned kind, in which an effective limit on the cost generated by an unauthorized user is also provided, when the information concerning these costs is not directly available at every moment. When the information concerning the cost is not available, the method will calculate the duration of the actual service being obtained and if this duration exceeds a certain limit, it will request the user to provide the password in order to continue said service.

Another object of the invention is to provide a method of said above-mentioned kind, in which the costs generated in a certain time interval does not exceed a certain limit. In this way, the possibility of creating large costs within a short time is prevented by requesting the user to provide the password before the service can be continued.

### BRIEF DESCRIPTION OF THE DRAWINGS

The accompanying drawings illustrate preferred embodiments of the invention and serve to explain the principles of the invention.
Figure 1 shows a flow chart of a first embodiment of the method according to the present invention,
Figure 2 shows a second embodiment of the method according to the present invention, and
Figure 3 shows a third embodiment of the method according to the present invention.

### DETAILED DESCRIPTION OF THE PREFERRED EMBODIMENTS

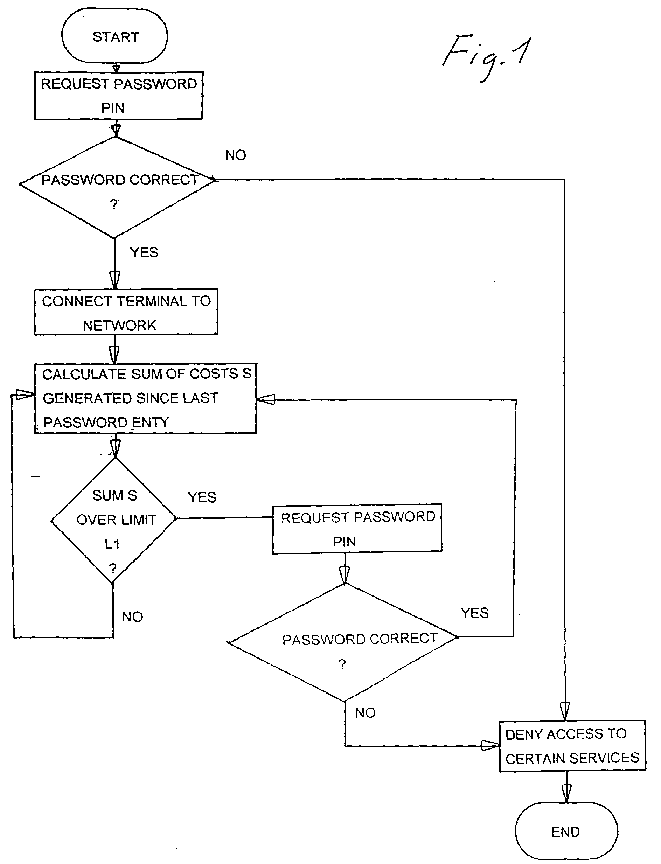

A preferred embodiment of the present invention is a method of controlling the amount of services obtained through a mobile phone interfacing with a communication network. When the user turns on the telephone, he or she is requested to enter the access code or password before the mobile phone will connect to a communication network. If the network is a GSM cellular telephone network, this code is referred to as the so-called PIN1-code which is stored on the SIM-card, the card containing the subscribtion data. After verification that the correct access code or password has been entered, the telephone will connect to the network and the user can place ordinary calls or request other services as available. If an incorrect or no password is entered, the phone will not connect to the network and switches off, which is illustrated in Figure 1 by the block end. After connecting the mobile telephone to the network the sum of the costs of services generated since the last password entry is calculated. When the sum S is over limit L1, the password is requested again and if the password is provided correctly the services will remain accessible. If the password is not provided correctly, the mobile phone will be disconnected from the network.

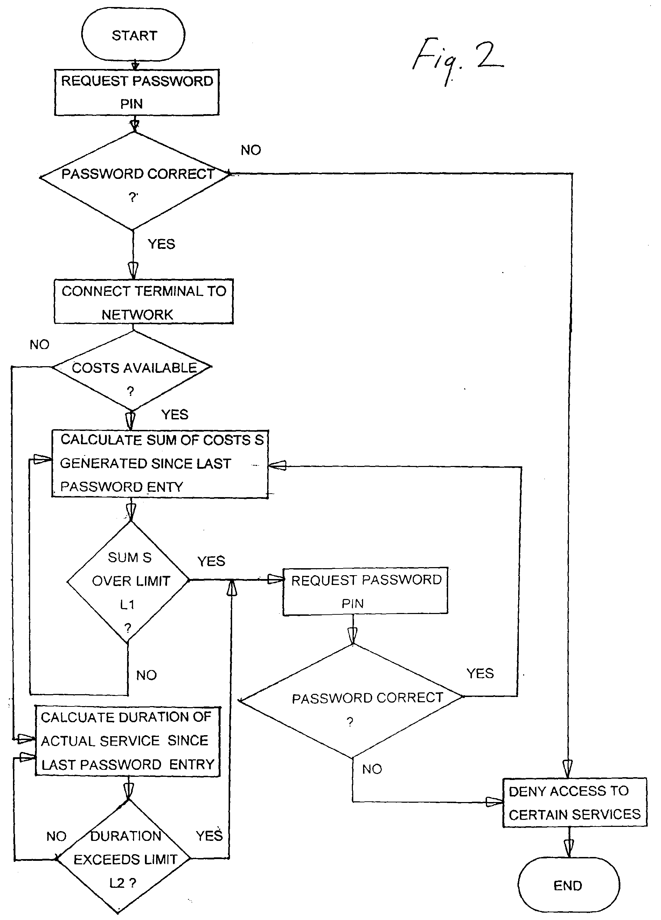

According to another preferred embodiment, the method includes a provision for securing the control of the generated costs when the information related to the costs generated by the services is not directly available. This embodiment comprises all the steps of the method previously described and, with reference to Figure 2, comprises further the step of checking that the information relating to the generated costs is available directly. If this information is available, the method continues as in the above-mentioned embodiment by calculating the sum of costs since the last password entry. If the information concerning the generated costs is not available, then the duration, since the last password entry, of the actual service being obtained is calculated. If this calculated duration exceeds a limit L2, the method will request the password to be provided again. If the password is not provided or not provided correctly, the mobile telephone will be disconnected from the communication network. If the password is provided correctly, the method will go back to the step of checking if the information relating to the cost generated is available directly.

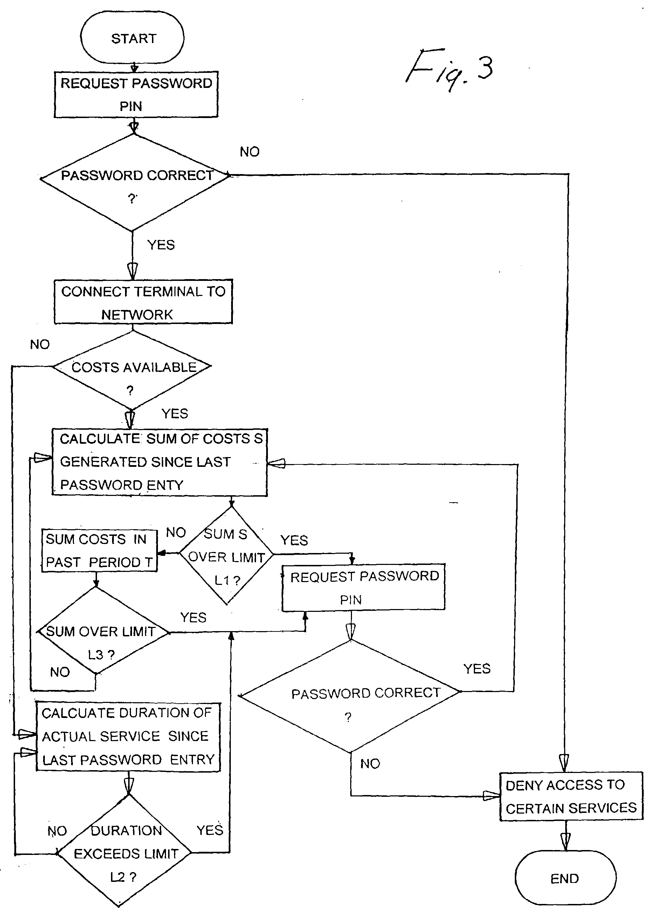

According to a further embodiment the method includes, with reference to Figure 3, a step of calculating the cost during a last time interval T. If the costs generated in the time interval T exceeds a certain limit of L3, the password will be requested again. If the password is provided correctly, the method will return to the step of checking that the information related to the generated costs is available. If the password is not provided correctly, the telephone is disconnected from the network.

In a preferred embodiment of the invention it is possible for the user to set the cost limit L1, the time limit L2, the time interval T and the cost limit L3, when the method of controlling the amount of services is activated in said mobile telephone. Optionally, the before-mentioned limits L1, L2, L3 and the time interval T can be preset when the mobile telephone is delivered to a user.

The information relating to the password or access code, the time limits and the cost limits and the time interval as well as the method itself may be stored in the telephone or other terminal itself or may be stored in a so-called SIM-card.

According to a preferred embodiment, only the cost limit L1 can be set by a person activating the method, whereby the time limit L2 and/or the cost limit L3 and/or the time interval T are set automatically using a function using the cost limit L1 as an input parameter.

The method according to any of the before-mentioned embodiments may comprise the step of giving a warning signal to the user before any of the time limits L1, L2, L3 is reached. The user of the mobile telephone can thus provide the access code or password, before the mobile telephone is disconnected from the communication network.

According to another embodiment of the invention, the mobile phone is upon exceeding one of the limits L1, L2, L3 not completely disconnected from the network but is denied certain services. These services may in particular comprise chargeable services or expensive services. In particular, certain emergency services could remain available.

Although the preferred embodiments have been illustrated with the mobile phone as an example, the method can be used with any other communication access terminal, e.g. a normal phone, a computer terminal or computer communicating with a computer network such as e.g. the Internet.

The mobile phone may be a GSM cellular telephone and the access code or password being the PIN1 code as defined in the GSM standard.

## Claims

1. Method of controlling an amount of services obtained through a terminal interfacing with a communication- or computer network, comprising the steps of requesting an access code or password (PIN) before the terminal can interface with said communication- or computer network,
**characterised** by the step of
- denying further access to certain services from said communication or computer network, in particular from chargeable services, when the sum of services (S) obtained from said network since the last entry of the access code or password (PIN) exceeds a certain limit (L1).

2. Method according to claim 1 further comprising the steps of
- requesting said access code (PIN) each time said sum of services (S) since the last entry of the access code or password (PIN) exceeds the limit (L1), and
- allowing further access to the certain services of the communication network, when said access code or password is provided.

3. Method according to claim 1 or 2, wherein said sum of services (S) is calculated as the sum of the cost generated by obtaining the services.

4. Method according to claim 3 comprising the steps of requesting said access code or password (PIN), when the information concerning the costs generated by the services is not directly available at every moment and duration of the actual service being obtained exceeds a certain limit (L2) before the service can be continued.

5. Method according to any of claims 1 to 4 comprising the steps of denying access to certain services, when during a time interval (T) of a certain predetermined length the costs generated exceed a certain limit (L3) and requesting the access code or password (PIN) before allowing access to said certain services again.

6. Method according to any of the claims 1 to 5, in which the cost limit (L1), and/or the time limit (L2) and/or the cost limit (L3) and/or the time interval (T) can be set by a person activating the method.

7. Method according to claim 5 or 6, in which the cost limit (L1) can be set by a person activating the method, whereby the time limit (L2) and/or the cost limit (L3) and/or the time interval (T) are set automatically using a function having the cost limit (L1) as an input parameter.

8. Method according to any of the preceding claims, wherein the limits (L1,L2,L3) and /or the time interval (T) are preset when the terminal is delivered to a user.

9. Method according to any of the claims 2 to 8 comprising the step of giving a warning signal to the user before any of the limits (L1,L2,L3) is reached, so that the user may provide the access code or password before access to certain services is denied.

10. Method according to any of the claims 1 to 9, wherein the certain services include all services provided by the communication- or computer network.

11. Method according to any of the claims 1 to 9, wherein the terminal is disconnected from the communication- or computer network when one of the limits (L1,L2,L3) is exceeded.

12. Method according to any of the preceding claims, wherein the terminal is a telephone and the services obtained are chargeable services from telecommunication service providers.

13. Method according to claim 13, wherein the telephone is a GSM cellular phone and the access code being the PIN1 code as defined in the GSM standard.

14. Method according to any of the claims 1 to 11, wherein the terminal is a computer, and the services being those offered by an Internet provider.
